# FASCICULE DE BREVET EUROPEEN

(11) **EP 2 537 712 B1**
(45) Date de publication et mention de la délivrance du brevet: **14.05.2014**
(21) Numéro de dépôt: 12171488.5
(22) Date de dépôt: 11.06.2012
(51) Int. Cl.: B60R 13/02

(54) **Ensemble d'habillage d'une partie de l'habitacle d'un véhicule automobile comprenant une pluralité de pièces d'habillage**
Anordnung einer Innenverkleidung für einen Teil des Innenraums eines Kraftfahrzeugs, die eine Vielzahl von Verkleidungselementen umfasst
Covering assembly of a portion of the passenger compartment of an automobile including a plurality of covering parts

(30) Priorité: 21.06.2011 FR 1155467
(43) Date de publication de la demande: 26.12.2012
(73) Titulaire: Faurecia Intérieur Industrie, 92000 Nanterre (FR)
(72) Inventeur: Edeline, Franck, 60590 Le Vaumain (FR)
(74) Mandataire: Domenego, Bertrand

(56) Documents cités:
- FR-A1- 2 833 908
- US-A1- 2008 001 422
- US-A1- 2011 006 557

## Description

La présente invention concerne un ensemble d'habillage d'une partie de l'habitacle d'un véhicule automobile, du type comprenant :
- une pièce structurelle, destinée à être fixée à l'habitacle du véhicule automobile,
- une première pièce d'habillage fixée sur une première partie de la pièce structurelle, ladite pièce d'habillage comprenant une face d'aspect s'étendant entre un premier bord et un deuxième bord,
- une deuxième pièce d'habillage fixée sur une deuxième partie de la pièce structurelle, ladite pièce d'habillage comprenant une face d'aspect s'étendant entre un premier bord et un deuxième bord,
- au moins une pièce d'habillage intermédiaire fixée sur la pièce structurelle et s'étendant entre la première et la deuxième pièces d'habillage, la pièce d'habillage intermédiaire comprenant une face d'aspect s'étendant entre un premier bord et un deuxième bord, le premier bord de la face d'aspect de la pièce d'habillage intermédiaire étant disposé en appui contre le premier bord de la face d'aspect de la première pièce d'habillage et le deuxième bord de la face d'aspect de la pièce d'habillage intermédiaire étant disposé en regard du premier bord de la face d'aspect de la deuxième pièce d'habillage.

L'habitacle d'un véhicule automobile est muni de plusieurs pièces d'habillage permettant de conférer une esthétique particulière à cet habitacle. Certaines de ces pièces sont agencées adjacentes les unes aux autres afin de masquer des interfaces techniques de l'habitacle. Ces pièces présentent chacune une forme spécifique pour s'adapter à la partie de l'habitacle qu'elle recouvre et comprend des moyens de fixation à cette partie. Il convient de s'assurer que la transition d'une pièce d'habillage à l'autre se fait sans jeu entre les pièces, un tel jeu nuisant à l'esthétique de l'ensemble d'habillage. Ainsi, les bords des pièces d'habillage adjacentes doivent être appuyés les uns contre les autres, sans espace entre ceux-ci. On parle de gestion des affleurements entre les pièces d'habillage.

Une telle gestion peut être compliquée lorsque les pièces d'habillage sont des pièces en matériau plastique injecté, car il est difficile de prévoir les dispersions et les retraits de matière occasionnés lors de la réalisation des différentes pièces d'habillage. En outre, si la gestion du positionnement et du dimensionnement de deux pièces d'habillage adjacentes peut être réalisée de façon simple, par isostatisme, il est impossible de garantir un positionnement sans jeu lorsqu'une pièce d'habillage doit être disposée de façon adjacente entre deux autres pièces d'habillage. En effet, la transition entre l'une des pièces d'habillage et la pièce d'habillage intermédiaire pourra être réalisée sans jeu par isostatisme, mais il y aura alors un jeu entre l'autre pièce d'habillage et la pièce d'habillage intermédiaire.

A titre d'exemple, pour une console centrale de véhicule automobile, s'étendant sous la planche de bord entre les sièges avant du véhicule, l'habillage de la structure de la console se fait par une partie de la planche de bord, par deux éléments d'habillage des flancs de la console et par un élément d'habillage arrière s'étendant sur la partie extrême de la structure de la console en regard des occupants du véhicule. Il convient alors de gérer les affleurements entre toutes ces pièces d'habillage sans qu'il y ait de jeu entre les bords de ces pièces, ce qui est impossible sans retravailler les pièces une fois qu'elles ont été montées dans le véhicule ou sans masquer les transitions entre les pièces, par exemple par des pièces de garnissage supplémentaires. Le temps de montage et les coûts de fabrication deviennent alors très élevés.

Un ensemble d'habillage selon le préambule de la revendication 1 est décrit dans le document US 2008/0001422 A1.

L'un des buts de l'invention est de pallier ces inconvénients en proposant un ensemble d'habillage comprenant une pièce d'habillage disposée entre deux autres pièces d'habillage, dans lequel tous les jeux entre les bords de ces pièces sont supprimés de façon simple et peu coûteuse.

A cet effet, l'invention concerne un ensemble d'habillage du type précité, dans lequel la deuxième pièce d'habillage est montée de façon mobile sur la deuxième partie de la pièce structurelle et la pièce d'habillage intermédiaire comprend un organe apte à déplacer la deuxième pièce d'habillage pour mettre en appui le premier bord de la face d'aspect de la deuxième pièce d'habillage contre le deuxième bord de la face d'aspect de la pièce d'habillage intermédiaire.

Le déplacement de la deuxième pièce d'habillage au moyen de l'organe de la pièce d'habillage intermédiaire permet de gérer simplement l'affleurement entre la pièce d'habillage intermédiaire et la deuxième pièce d'habillage, tandis que l'affleurement la pièce d'habillage intermédiaire et la première pièce d'habillage peut être géré de façon connue par isostatisme. On obtient ainsi un ensemble d'habillage dans lequel la transition entre les pièces d'habillage se fait sans jeu de façon simple lors du montage de l'ensemble d'habillage, c'est-à-dire sans nécessiter d'opérations supplémentaires d'ajustement.

Selon d'autres caractéristiques de l'ensemble d'habillage de l'invention:
- la deuxième pièce d'habillage est montée mobile en translation par rapport à la deuxième partie de la pièce structurelle, selon une direction de rapprochement du premier bord de la face d'aspect de la deuxième pièce d'habillage du deuxième bord de la face d'aspect de la pièce d'habillage intermédiaire ;
- l'organe est un pion de guidage reçu dans une lumière de la deuxième pièce d'habillage, l'insertion du pion de guidage dans ladite lumière entraînant le déplacement de la deuxième pièce d'habillage sur la deuxième partie de la pièce structurelle de sorte à mettre le premier bord de la face d'aspect de ladite deuxième pièce d'habillage en appui contre le deuxième bord de la face d'aspect de la pièce d'habillage intermédiaire ;
- la lumière de la deuxième pièce d'habillage est disposée en regard d'un orifice de la pièce structurelle, le pion de guidage traversant la lumière de la deuxième pièce d'habillage et étant introduit dans l'orifice de la pièce structurelle, l'introduction du pion de guidage dans ledit orifice entraînant le positionnement de la deuxième pièce d'habillage par rapport à la pièce structurelle et par rapport à la pièce d'habillage intermédiaire ;
- la lumière est formée sur une partie structurelle de la deuxième pièce d'habillage, adjacente à la face d'aspect, le pion de guidage saillant d'une partie extrême de la face interne de la pièce d'habillage intermédiaire, opposée à la face d'aspect de ladite pièce d'habillage intermédiaire, ladite partie extrême recouvrant la partie structurelle de la deuxième pièce d'habillage ;
- la pièce d'habillage intermédiaire comprend un pion de guidage amont et un pion de guidage aval, la deuxième pièce d'habillage comprenant une lumière amont et une lumière aval, l'insertion du pion de guidage amont dans la lumière amont entraînant le positionnement de la deuxième pièce d'habillage selon la direction de rapprochement et l'insertion du pion de guidage aval dans la lumière aval entraînant le positionnement de la deuxième pièce d'habillage selon la direction de rapprochement et selon une direction d'élévation de la pièce structurelle ;
- la deuxième pièce d'habillage comprend au moins un pion de centrage saillant de la deuxième pièce d'habillage selon la direction de rapprochement, la pièce structurelle comprenant au moins un orifice de réception dudit pion de centrage, ledit pion de centrage positionnant et guidant le déplacement de ladite deuxième pièce d'habillage (20) par rapport à la pièce structurelle lorsque ledit pion de centrage est introduit dans ledit orifice de réception ;
- la pièce structurelle comprend deux flancs reliés l'un à l'autre par la première partie et par la deuxième partie, lesdites parties s'étendant de part et d'autre desdits flancs, l'ensemble d'habillage comprenant deux pièces d'habillage intermédiaires s'étendant respectivement sur chaque flanc de la pièce structurelle entre la première et la deuxième pièces d'habillage ;
- les deux pièces d'habillage intermédiaires sont des pièces en matériau plastique injecté issues d'un même moule ; et
- la pièce structurelle forme le corps d'une console centrale de véhicule automobile et définit un volume de rangement.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective d'un ensemble d'habillage selon l'invention, appliqué à une console centrale de véhicule automobile,
- la Fig. 2 est une représentation schématique en perspective d'une partie extrême aval de l'ensemble de la Fig. 1,
- la Fig. 3 est une représentation schématique en perspective de la partie extrême de la Fig. 2 selon un autre angle de vue, et
- la Fig. 4 est une représentation schématique de dessus de la partie extrême de la Fig. 2 lors de la fixation de pièces d'habillage intermédiaires.

Dans la description, les termes « amont » et « aval » sont définis selon la direction avant-arrière d'un véhicule automobile monté, l'amont se trouvant vers l'avant du véhicule et l'aval vers l'arrière dudit véhicule. Le terme « transversal » est défini selon la largeur du véhicule, c'est-à-dire selon une direction sensiblement perpendiculaire à la direction avant-arrière dans un plan horizontal.

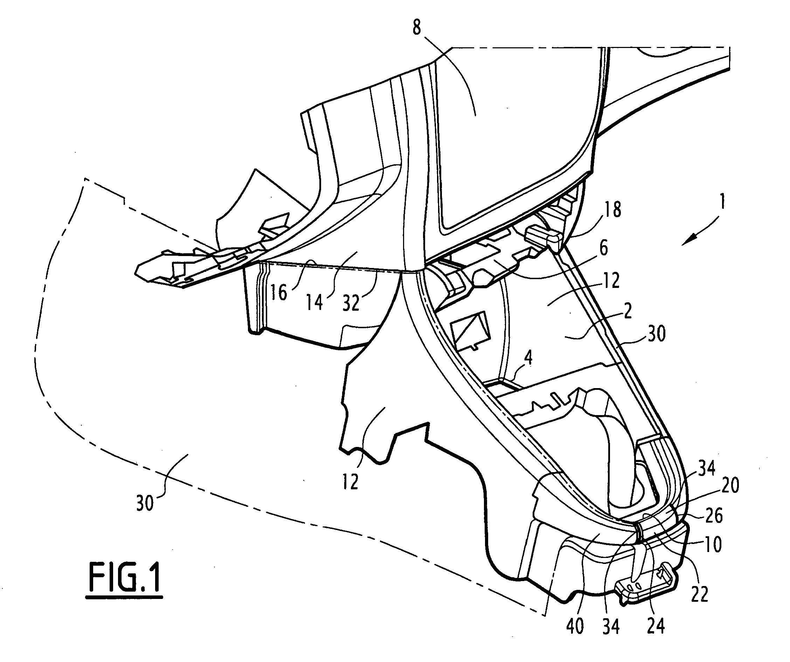

En référence à la Fig. 1, on décrit un ensemble d'habillage 1 d'une partie de l'habitacle d'un véhicule automobile. Sur cette figure, l'ensemble d'habillage 1 est appliqué à la console centrale s'étendant sous la planche de bord entre les sièges avant du véhicule, c'est-à-dire « aux pieds » des occupants du véhicule. Il est cependant entendu que l'invention n'est pas limitée à une telle console centrale et que l'ensemble d'habillage peut être appliqué à toute partie de l'habitacle dans laquelle une pièce d'habillage doit être disposée entre deux autres pièces d'habillage sans jeu entre les bords de ces pièces.

L'ensemble d'habillage 1 comprend une pièce structurelle 2, formant le corps d'une console centrale de véhicule automobile et définissant un volume de rangement 4 selon l'exemple représenté sur les figures. De manière générale, par pièce structurelle, on entend une pièce servant à définir une fonction particulière dans l'habitacle du véhicule, par exemple un rangement dans le présent exemple ou une fonction de rigidification ou de support d'autres pièces, etc., au contraire d'une pièce d'habillage ayant essentiellement pour fonction d'améliorer l'esthétisme de l'habitacle. La pièce structurelle 2 représentée sur les figures comprend une première partie extrême 6, s'étendant sensiblement transversalement du côté amont et surmontée par une structure de planche de bord 8, et une deuxième partie extrême 10, s'étendant sensiblement transversalement du côté aval de l'autre côté du volume de rangement 4 par rapport à la première partie extrême 6. La première partie extrême 6 est reliée à la deuxième partie extrême 10 par deux flancs 12 s'étendant de part et d'autre du volume de rangement 4 selon la direction amont-aval.

Afin d'améliorer l'aspect de l'habitacle du véhicule, les flancs 12 et la deuxième partie extrême 10 de la pièce structurelle 2, visibles depuis l'habitacle du véhicule, doivent être recouverts par un garnissage, ce garnissage devant être intégré parfaitement avec le garnissage de la structure de planche de bord 8, au niveau de la jonction entre les flancs 12 et de la première partie extrême 6.

L'ensemble d'habillage 1 comprend ainsi une première pièce d'habillage 14, formée par le garnissage de la structure de planche de bord 8 dans l'exemple représenté sur les figures. La première pièce d'habillage 14 s'étend sur la première partie extrême 6 de la pièce structurelle 2, comme représenté sur la Fig. 1, et comprend une face d'aspect visible depuis l'habitacle du véhicule automobile. La face d'aspect s'étend entre un premier bord 16, appliqué en regard de la jonction entre la première partie extrême 6 et l'un des flancs 12 de la pièce structurelle 2, et un deuxième bord 18, appliqué en regard de la jonction entre la première partie extrême 6 et l'autre flanc 12 de la pièce structurelle 2. Les premier et le deuxième bords 16 et 18 s'étendent sensiblement vers l'avant du véhicule en partant de la jonction de la première partie extrême 6 et des flancs 12 de la pièce structurelle, dans l'exemple représenté sur la Fig. 1. Selon cet exemple, la face d'aspect de la première pièce d'habillage 14 est par exemple formée de matière plastique du type polypropylène (PP), polyéthylène (PE), polycarbonate acrylonitrile butadiène styrène (PC-ABS) ou bien par une peau de planche de bord, en matériau plastique du type polyoléfines thermoplastique (TPO), polychlorure de vinyle (PVC) ou autre, ou en matériau textile ou en cuir ou tout autre matériau adapté pour revêtir la planche de bord d'un véhicule automobile.

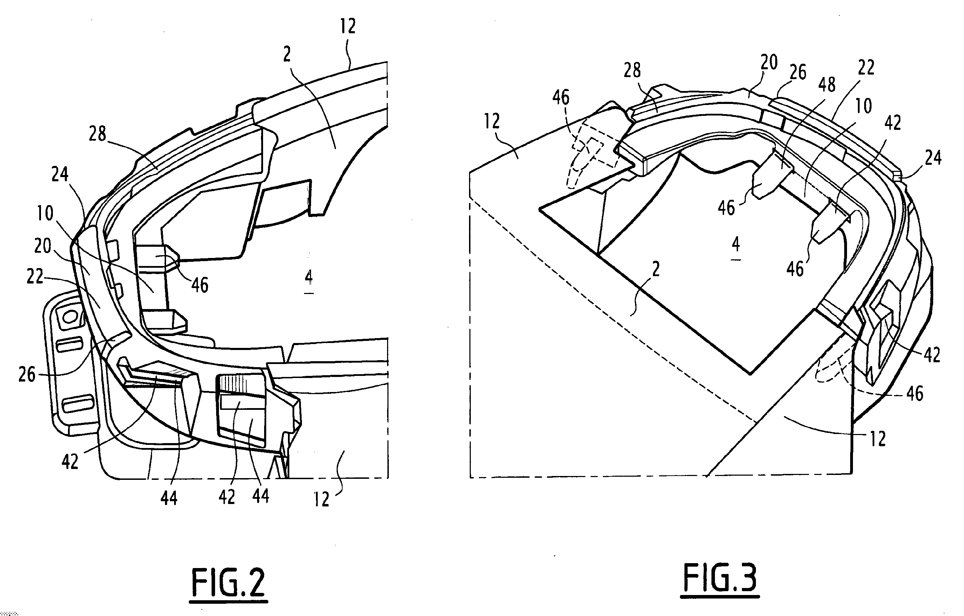

L'ensemble d'habillage comprend en outre une deuxième pièce d'habillage 20 fixée sur la deuxième partie extrême 10 de la pièce structurelle 2. La deuxième pièce d'habillage 20 comprend une face d'aspect 22, visible depuis l'habitacle du véhicule automobile, s'étendant sensiblement transversalement entre un premier bord 24 s'étendant au voisinage de l'extrémité aval de l'un des flancs 12 de la pièce structurelle 2 et un deuxième bord 26 s'étendant au voisinage de l'extrémité aval de l'autre flanc 12 de la pièce structurelle 2. Selon l'exemple représenté sur les figures, la deuxième pièce d'habillage 20 forme également une pièce structurelle de la console centrale, c'est-à-dire qu'elle participe à former la structure du corps de la console, tel qu'une bordure du volume de rangement sur laquelle le couvercle de la console est destiné à se fermer. A cet effet, la deuxième pièce d'habillage 20 comprend une partie structurelle 28 s'étendant de part et d'autre et sur la face interne de la deuxième pièce d'habillage, tournée vers le volume de rangement 4 et opposée à la face d'aspect 22, de sorte que la deuxième pièce d'habillage 20 présente une forme en U surmontant la deuxième partie extrême 10 et s'étendant sur les extrémités aval des flancs 12 de la pièce structurelle 2, comme représenté sur les Fig. 2 à 4. La face d'aspect 22 et ses premier et deuxième bords 24, 26 s'étendent en saillie de la partie structurelle 28. Ainsi, dans l'exemple représenté sur les figures, la face d'aspect 22 ne s'étend que sur une partie de la deuxième pièce d'habillage 20, notamment celle qui est destinée à recouvrir la deuxième partie extrême 10 de la pièce structurelle 2. Une telle pièce d'habillage 20 est désignée sous le terme d'étrier de console. La partie structurelle 28 est par exemple pourvue de moyens de retenue (non représentés) d'un couvercle de la console.

La partie structurelle 28 comprend en outre des moyens de fixation de la deuxième pièce d'habillage 20 sur la pièce structurelle 2, comme cela sera décrit ultérieurement.

L'ensemble d'habillage 1 comprend en outre au moins une pièce d'habillage intermédiaire 30 fixée sur la pièce structurelle 2 et s'étendant entre la première et la deuxième pièces d'habillage 14 et 20. Dans l'exemple représenté sur les figures, l'ensemble d'habillage 1 comprend deux pièces d'habillage intermédiaires 30 recouvrant chacune un des flancs 12 de la pièce structurelle 2 entre la première et la deuxième pièces d'habillage 14 et 20. La pièce d'habillage intermédiaire 30 comprend une face d'aspect, visible depuis l'habitacle du véhicule automobile, masquant les flancs 12 de la pièce structurelle 2 et éventuellement d'autres pièces structurelles de l'habitacle du véhicule. La face d'aspect s'étend entre un premier bord 32 s'étendant en regard du premier bord 16 de la face d'aspect de la première pièce d'habillage 14 et un deuxième bord 34 s'étendant en regard du premier bord 24 de la face d'aspect de la deuxième pièce d'habillage 20. Selon l'exemple représenté sur les figures, le premier et le deuxième bords de la face d'aspect de l'autre pièce d'habillage intermédiaire 30 s'étendent respectivement en regard du deuxième bord 18 de la face d'aspect de la première pièce d'habillage 14 et du deuxième bord 26 de la face d'aspect de la deuxième pièce d'habillage 20.

Les pièces d'habillage intermédiaire 30 sont réalisées de sorte que le premier bord 32 de leur face d'aspect soit en appui respectivement contre le premier bord 16 et le deuxième bord 18 de la face d'aspect de la première pièce d'habillage 14. Par en appui, on entend que les bords sont disposés l'un contre l'autre sans espace, ou jeu, entre ces bords, c'est-à-dire que le bord de la face d'aspect de la pièce d'habillage intermédiaire affleure le bord de la face d'aspect de la première pièce d'habillage sans laisser apparaître la pièce structurelle 2 depuis l'extérieur de l'ensemble d'habillage 1. La mise en appui du premier bord 32 des pièces d'habillage intermédiaires 30 contre le premier bord 16 et le deuxième bord 18 de la première pièce d'habillage 14 peut être réalisée de façon simple et connue par isostatisme. A cet effet, les deux pièces d'habillage intermédiaires 30 sont par exemple réalisée en matériau plastique injecté et sont issues d'un même moule, ce qui permet d'avoir des retraits et des dispersions identiques sur les deux pièces d'habillage intermédiaires 30, facilitant ainsi leur mise en place par isostatisme par rapport au premier 16 et au deuxième 18 bords de la première pièce d'habillage 14.

Chaque pièce d'habillage intermédiaire 30 est fixée sur un flanc 12 de la pièce structurelle 2 par au moins un pion de fixation 36 saillant de la face interne de la pièce d'habillage intermédiaire 30, opposée à la face d'aspect, selon une direction sensiblement transversale vers la pièce structurelle 2. La pièce structurelle 2 comprend au moins un orifice de réception (non représenté) du pion de fixation 36, la pièce d'habillage intermédiaire 30 étant fixée sur la pièce structurelle 2 lorsque le pion de fixation 36 est introduit dans l'orifice de réception. Selon un mode de réalisation, la pièce d'habillage intermédiaire 30 est fixée à la pièce structurelle 2 par une pluralité de pions de fixation 36 répartis sur la face interne de la pièce d'habillage intermédiaire 30 selon la direction amont-aval, la pièce structurelle 2 comprenant autant d'orifices de réception correspondants.

Afin de permettre la mise en appui du deuxième bord 34 des pièces d'habillage intermédiaires 30 contre le premier 24 et le deuxième 26 bords de la face d'aspect 22 de la deuxième pièce d'habillage 20 respectivement, la deuxième pièce d'aspect 20 présente un degré de liberté par rapport à la pièce structurelle 2, c'est-à-dire qu'elle est montée de façon mobile par rapport à la deuxième partie extrême 10 de la pièce structurelle 2. Plus particulièrement, dans l'exemple représenté sur les figures, la deuxième pièce d'habillage 20 est montée mobile en translation selon une direction de rapprochement du premier et deuxième bords 24, 26 des deuxièmes bords 34 des pièces d'habillage intermédiaire. Selon l'exemple représenté sur les figures, la direction de rapprochement est sensiblement la direction amont-aval. Le déplacement en translation de la deuxième pièce d'habillage 20 permet de rapprocher les bords de sa face d'aspect des bords de la face d'aspect des pièces d'habillage intermédiaires afin de les mettre en appui les uns contre les autres et d'avoir ainsi un garnissage de la pièce structurelle 2 sans défaut, c'est-à-dire sans que la pièce structurelle 2 apparaisse de l'extérieur de l'ensemble d'habillage 1.

Le déplacement de la deuxième pièce d'habillage 20 par rapport à la pièce structurelle 2 se fait par la mise en place des pièces d'habillage intermédiaires 30. Pour ce faire, chaque pièce d'habillage intermédiaire 30 comprend au moins un organe apte à déplacer la pièce d'habillage 20 en translation pour la mettre en place. Cet organe est un pion de guidage 38 saillant d'une partie extrême 40 de la face interne de la pièce d'habillage intermédiaire 30 selon une direction sensiblement transversale. Cette partie extrême 40 recouvre une portion de la partie structurelle 28 de la deuxième pièce d'habillage 20, cette portion s'étendant d'un côté de la face d'aspect 22 sur la partie extrême aval d'un flanc 12 de la pièce structurelle 2. Une lumière 42, de forme sensiblement complémentaire au pion de guidage 38, est formée dans cette portion de la partie structurelle 28 et traverse cette portion de sorte à permettre le passage du pion de guidage 38 au travers de cette lumière 42. Un orifice 44 est formé dans la pièce structurelle 2 en regard de la lumière 42 de sorte à recevoir le pion de guidage 38. Ainsi, l'introduction du pion de guidage 38 dans la lumière 42 puis dans l'orifice 44 entraîne le positionnement de la deuxième pièce d'habillage 20 par rapport à la pièce structurelle 2 et par rapport à la pièce d'habillage intermédiaire 30 de sorte que le premier bord 24, respectivement le deuxième bord 26, de la face d'aspect 22 de la deuxième pièce d'habillage 20 vient en appui contre le deuxième bord 34 de la face d'aspect des pièces d'habillage intermédiaires 30. Le positionnement se fait donc simplement sans étape supplémentaire de positionnement après la fixation des pièces d'habillage intermédiaires 30 sur la pièce structurelle 2.

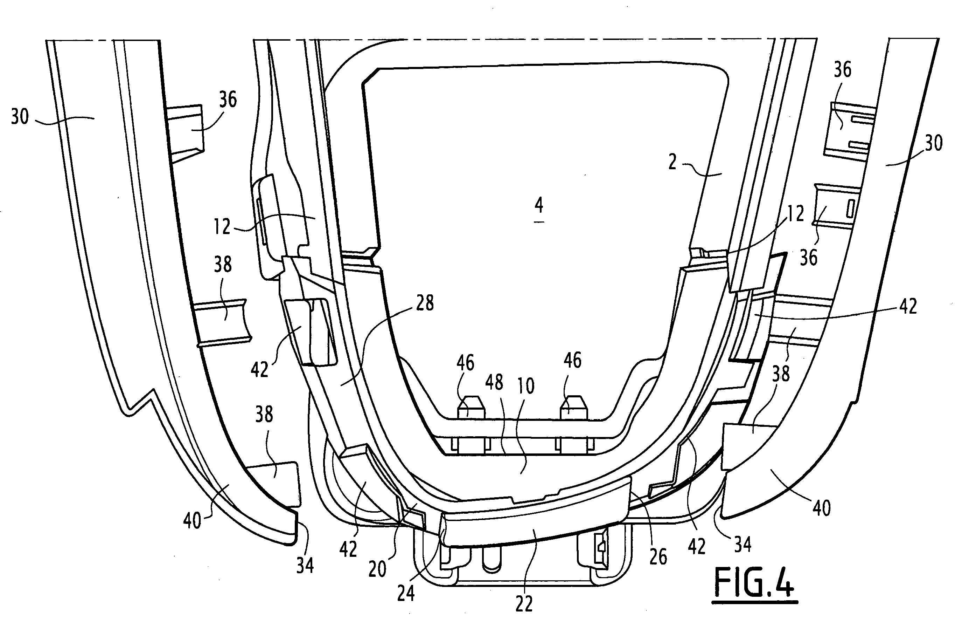

Selon le mode de réalisation représenté sur la Fig. 4, chaque pièce d'habillage intermédiaire 30 comprend un pion de guidage 38 amont et un pion de guidage 38 aval, la deuxième pièce d'habillage 20 comprenant une lumière 42 amont et une lumière 42 aval, l'insertion du pion de guidage amont dans la lumière amont entraînant le positionnement de la deuxième pièce d'habillage 20 selon la direction de rapprochement et l'insertion du pion de guidage aval dans la lumière aval entraînant le positionnement de la deuxième pièce d'habillage selon la direction de rapprochement et selon une direction d'élévation de la pièce structurelle 2. Ainsi, le positionnement de la deuxième pièce d'habillage 20 par rapport à la pièce structurelle 2 et aux pièces d'habillage intermédiaires 30 se fait dans toutes les directions, ce qui garanti un garnissage sans défaut de la pièce structurelle 2 par la simple fixation des pièces d'habillage intermédiaires 30 sur la pièce structurelle 2.

Afin de permettre le positionnement, le maintien et le guidage de la deuxième pièce d'habillage 20 en translation par rapport à la pièce structurelle 2, les moyens de fixation de la partie structurelle 28 comprennent au moins un pion de centrage 46 saillant de la deuxième pièce d'habillage 20 selon la direction de rapprochement. Le pion de centrage 46 coopère avec un orifice de réception 48 dudit pion de centrage prévu dans la pièce structurelle 2, le pion de centrage 46 positionnant et guidant le déplacement de ladite deuxième pièce d'habillage 20 par rapport à la pièce structurelle 2 lorsque le pion de centrage 46 est introduit dans l'orifice de réception 48. Selon le mode de réalisation représenté sur les Fig. 2 à 4, la deuxième pièce d'habillage 20 comprend deux pions de centrage 46 saillant de la partie structurelle 28 à partir la face interne de la deuxième pièce d'habillage 20 en regard de la face d'aspect 22. Selon le mode de réalisation représenté sur la Fig. 3, la deuxième pièce d'habillage 20 comprend en outre deux pions de centrage 46 saillants des parties extrêmes de la partie structurelle 28, les orifices de réception de ces deux pions de centrage étant réalisés dans l'épaisseur des flancs 12 de la pièce structurelle 2.

Comme indiqué précédemment, bien que l'invention ait été plus particulièrement décrite en relation avec une console centrale de véhicule automobile, cette invention s'applique dès lors que l'on souhaite garnir une pièce structurelle avec trois pièces d'habillage, dont l'une s'étend entre les deux autres.

## Revendications

1. Ensemble d'habillage (1) d'une partie de l'habitacle d'un véhicule automobile, ledit ensemble comprenant :
- une pièce structurelle (2), destinée à être fixée à l'habitacle du véhicule automobile,
- une première pièce d'habillage (14) fixée sur une première partie (6) de la pièce structurelle (2), ladite pièce d'habillage (14) comprenant une face d'aspect s'étendant entre un premier bord (16) et un deuxième bord (18),
- une deuxième pièce d'habillage (20) fixée sur une deuxième partie (10) de la pièce structurelle (2), ladite pièce d'habillage (20) comprenant une face d'aspect (22) s'étendant entre un premier bord (24) et un deuxième bord (26),
- au moins une pièce d'habillage intermédiaire (30) fixée sur la pièce structurelle (2) et s'étendant entre la première et la deuxième pièces d'habillage (14, 20), la pièce d'habillage intermédiaire (30) comprenant une face d'aspect s'étendant entre un premier bord (32) et un deuxième bord (34), le premier bord (32) de la face d'aspect de la pièce d'habillage intermédiaire (30) étant disposé en appui contre le premier bord (16) de la face d'aspect de la première pièce d'habillage (14) et le deuxième bord (34) de la face d'aspect de la pièce d'habillage intermédiaire (30) étant disposé en regard du premier bord (24) de la face d'aspect (22) de la deuxième pièce d'habillage (20),
**caractérisé en ce que** la deuxième pièce d'habillage (20) est montée de façon mobile sur la deuxième partie (10) de la pièce structurelle (2) et **en ce que** la pièce d'habillage intermédiaire (30) comprend un organe apte à déplacer la deuxième pièce d'habillage (20) pour mettre en appui le premier bord (24) de la face d'aspect (22) de la deuxième pièce d'habillage (20) contre le deuxième bord (34) de la face d'aspect de la pièce d'habillage intermédiaire (30).

2. Ensemble d'habillage selon la revendication 1, **caractérisé en ce que** la deuxième pièce d'habillage (20) est montée mobile en translation par rapport à la deuxième partie (10) de la pièce structurelle (2), selon une direction de rapprochement du premier bord (24) de la face d'aspect (22) de la deuxième pièce d'habillage (20) du deuxième bord (34) de la face d'aspect (22) de la pièce d'habillage intermédiaire (30).

3. Ensemble d'habillage selon la revendication 1 ou 2, **caractérisé en ce que** l'organe est un pion de guidage (38) reçu dans une lumière (42) de la deuxième pièce d'habillage (20), l'insertion du pion de guidage (38) dans ladite lumière (42) entraînant le déplacement de la deuxième pièce d'habillage (20) sur la deuxième partie (10) de la pièce structurelle (2) de sorte à mettre le premier bord (24) de la face d'aspect (22) de ladite deuxième pièce d'habillage (20) en appui contre le deuxième bord (34) de la face d'aspect de la pièce d'habillage intermédiaire (30).

4. Ensemble d'habillage selon la revendication 3, **caractérisé en ce que** la lumière (42) de la deuxième pièce d'habillage (20) est disposée en regard d'un orifice (44) de la pièce structurelle (2), le pion de guidage (38) traversant la lumière (42) de la deuxième pièce d'habillage (20) et étant introduit dans l'orifice (44) de la pièce structurelle (2), l'introduction du pion de guidage (38) dans ledit orifice (44) entraînant le positionnement de la deuxième pièce d'habillage (20) par rapport à la pièce structurelle (2) et par rapport à la pièce d'habillage intermédiaire (30).

5. Ensemble d'habillage selon la revendication 3 ou 4, **caractérisé en ce que** la lumière (42) est formée sur une partie structurelle (28) de la deuxième pièce d'habillage (20), adjacente à la face d'aspect (22), le pion de guidage (38) saillant d'une partie extrême (40) de la face interne de la pièce d'habillage intermédiaire (30), opposée à la face d'aspect de ladite pièce d'habillage intermédiaire (30), ladite partie extrême (40) recouvrant la partie structurelle (28) de la deuxième pièce d'habillage (20).

6. Ensemble d'habillage selon les revendications 2 et 3, **caractérisé en ce que** la pièce d'habillage intermédiaire (30) comprend un pion de guidage (38) amont et un pion de guidage (38) aval, la deuxième pièce d'habillage (20) comprenant une lumière (42) amont et une lumière (42) aval, l'insertion du pion de guidage (38) amont dans la lumière (42) amont entraînant le positionnement de la deuxième pièce d'habillage (20) selon la direction de rapprochement et l'insertion du pion de guidage (38) aval dans la lumière (42) aval entraînant le positionnement de la deuxième pièce d'habillage (20) selon la direction de rapprochement et selon une direction d'élévation de la pièce structurelle (2).

7. Ensemble d'habillage selon l'une quelconque des revendications 2 à 6, **caractérisé en ce que** la deuxième pièce d'habillage (20) comprend au moins un pion de centrage (46) saillant de la deuxième pièce d'habillage (20) selon la direction de rapprochement, la pièce structurelle (2) comprenant au moins un orifice de réception (48) dudit pion de centrage (46), ledit pion de centrage (46) positionnant et guidant le déplacement de ladite deuxième pièce d'habillage (20) par rapport à la pièce structurelle (2) lorsque ledit pion de centrage (46) est introduit dans ledit orifice de réception (48).

8. Ensemble d'habillage selon l'une quelconque des revendications 1 à 7, **caractérisé en ce que** la pièce structurelle (2) comprend deux flancs (12) reliés l'un à l'autre par la première partie (6) et par la deuxième partie (10), lesdites parties (6, 10) s'étendant de part et d'autre desdits flancs (12), l'ensemble d'habillage comprenant deux pièces d'habillage intermédiaires (30) s'étendant respectivement sur chaque flanc (12) de la pièce structurelle (2) entre la première et la deuxième pièces d'habillage (14, 20).

9. Ensemble d'habillage selon la revendication 8, **caractérisé en ce que** les deux pièces d'habillage intermédiaires (30) sont des pièces en matériau plastique injecté issues d'un même moule.

10. Ensemble d'habillage selon l'une quelconque des revendications 1 à 9, **caractérisé en ce que** la pièce structurelle (2) forme le corps d'une console centrale de véhicule automobile et définit un volume de rangement (4).

## Patentansprüche

1. Baugruppe zum Verkleiden (1) eines Abschnitts einer Insassenzelle eines Automobil-Fahrzeugs, wobei die Baugruppe aufweist:
- ein Strukturbauteil (2), das dazu bestimmt ist, an der Insassenzelle des Automobil-Fahrzeugs befestigt zu sein,
- ein erstes Verkleidungsteil (14), welches an einem ersten Abschnitt (6) des Strukturbauteils (2) befestigt ist, wobei das Verkleidungsteil (14) eine Ansichtsfläche hat, die sich zwischen einem ersten Rand (16) und einem zweiten Rand (18) erstreckt,
- ein zweites Verkleidungsteil (20), welches an einem zweiten Abschnitt (10) des Strukturbauteils (2) befestigt ist, wobei das Verkleidungsteil (20) eine Ansichtsfläche (22) hat, die sich zwischen einem ersten Rand (24) und einem zweiten Rand (26) erstreckt,
- wenigstens ein Zwischenverkleidungsteil (30), das an dem Strukturbauteil (2) befestigt ist und das sich zwischen dem ersten und dem zweiten Verkleidungsteil (14, 20) erstreckt, wobei das Zwischenverkleidungsteil (30) aufweist eine Ansichtsfläche, die sich zwischen einem ersten Rand (32) und einem zweiten Rand (34) erstreckt, wobei der erste Rand (32) der Ansichtsfläche des Zwischenverkleidungsteils (30) angeordnet ist in Anlage gegen den ersten Rand (16) der Ansichtsfläche des ersten Verkleidungsteils (14) und der zweite Rand (34) der Ansichtsfläche des Zwischenverkleidungsteils (30) dem ersten Rand (24) der Ansichtsfläche (22) des zweiten Verkleidungsteils (20) zugewandt angeordnet ist,
**dadurch gekennzeichnet, dass** das zweite Verkleidungsteil (20) in nichtbewegbarer Weise an dem zweiten Abschnitt (10) des Strukturbauteils (2) montiert ist und dass das Zwischenverkleidungsteil (30) aufweist ein Organ, das in der Lage ist, das zweite Verkleidungsteil (20) zu verlagern, um den ersten Rand (24) der Ansichtsfläche (22) des zweiten Verkleidungsteils (20) gegen den zweiten Rand (34) der Ansichtsfläche des Zwischenverkleidungsteils (30) in Anlage zu bringen.

2. Baugruppe zum Verkleiden gemäß Anspruch 1, **dadurch gekennzeichnet, dass** das zweite Verkleidungsteil (20) bezüglich des zweiten Abschnitts (10) des Strukturbauteils (2) translatorisch bewegbar montiert ist entlang einer Annäherungsrichtung des ersten Rands (24) der Ansichtsfläche (22) des zweiten Verkleidungsteils (20) vom zweiten Rand (34) der Ansichtsfläche (22) des Zwischenverkleidungsteils (30).

3. Baugruppe zum Verkleiden gemäß Anspruch 1 oder 2, **dadurch gekennzeichnet, dass** das Organ ein Führungsblock (38) ist, der in einer Öffnung (42) des zweiten Verkleidungsteils (20) aufgenommen ist, wobei das Einsetzen des Führungsblocks (38) in die Öffnung (42) die Verlagerung des zweiten Verkleidungsteils (20) an dem zweiten Abschnitt (10) des Strukturbauteils (2) bewirkt, um den ersten Rand (24) der Ansichtsfläche (22) des zweiten Verkleidungsteils (20) in Anlage gegen den zweiten Rand (34) der Ansichtsfläche des Zwischenverkleidungsteils (30) zu bringen.

4. Baugruppe zum Verkleiden gemäß Anspruch 3, **dadurch gekennzeichnet, dass** die Öffnung (42) des zweiten Verkleidungsteils (20) gegenüber einer Öffnung (44) des Strukturbauteils (2) angeordnet ist, wobei der Führungsblock (38) die Öffnung (42) des zweiten Verkleidungsteils (20) durchquert und in die Öffnung (44) des Strukturbauteils (2) eingesetzt ist, wobei das Einsetzen des Führungsblocks (38) in die Öffnung (44) das Positionieren des zweiten Verkleidungsbauteils (20) relativ zu dem Strukturbauteil (2) und relativ zu dem Zwischenverkleidungsbauteil (30) bewirkt.

5. Baugruppe zum Verkleiden gemäß Anspruch 3 oder 4, **dadurch gekennzeichnet, dass** die Öffnung (42) an einem Strukturabschnitt (28) des zweiten Verkleidungsteils (20) ausgebildet ist angrenzend an die Ansichtsfläche (22), wobei der Führungsblock (38) von einem Endabschnitt (40) der Innenfläche des Zwischenverkleidungsteils (30) entgegengesetzt zu der Ansichtsfläche des Zwischenverkleidungsteils (30) vorsteht, wobei der Endabschnitt (40) den Strukturabschnitt (28) des zweiten Verkleidungsteils (20) abdeckt.

6. Baugruppe zum Verkleiden gemäß den Ansprüchen 2 und 3, **dadurch gekennzeichnet, dass** das Zwischenverkleidungsteil (30) aufweist einen vorderen Führungsblock (38) und einen hinteren Führungsblock (38), wobei das zweite Verkleidungsteil (20) aufweist eine vordere Öffnung (42) und eine hintere Öffnung (42), wobei das Einsetzen des vorderen Führungsblocks (28) in die vordere Öffnung (42) das Positionieren des zweiten Verkleidungsteils (20) entlang der Annäherungsrichtung bewirkt und wobei das Einsetzen des hinteren Führungsblocks (38) in die hintere Öffnung (42) das Positionieren des zweiten Verkleidungsteils (20) entlang der Annäherungsrichtung und entlang einer Höhenrichtung des Strukturbauteils (2) bewirkt.

7. Baugruppe zum Verkleiden gemäß einem der Ansprüche 2 bis 6, **dadurch gekennzeichnet, dass** das zweite Verkleidungsteil (20) aufweist wenigstens einen Zentrierblock (46), der von dem zweiten Verkleidungsteil (20) entlang der Annäherungsrichtung vorsteht, wobei das Strukturbauteil (2) aufweist wenigstens eine Öffnung zum Aufnehmen (48) des Zentrierblocks (46), wobei der Zentrierblock (46) positioniert und führt die Verlagerung des zweiten Verkleidungsteils (20) bezüglich des Strukturbauteils (2), wenn der Zentrierblock (46) in die Öffnung zum Aufnehmen (48) eingesetzt wird.

8. Baugruppe zum Verkleiden gemäß irgendeinem der Ansprüche 1 bis 7, **dadurch gekennzeichnet, dass** das Strukturbauteil (2) aufweist zwei Flanken (12), die mittels des ersten Abschnitts (6) und mittels des zweiten Abschnitts (10) miteinander verbunden sind, wobei die Abschnitte (6, 10) sich auf beiden Seiten der Flanken (12) erstrecken, wobei die Baugruppe zum Verkleiden aufweist zwei Zwischenverkleidungsteile (30), die sich jeweilig an der jeweiligen Flanke (12) des Strukturbauteils (2) zwischen dem ersten und dem zweiten Verkleidungsbauteil (14, 20) erstrecken.

9. Baugruppe zum Verkleiden gemäß Anspruch 8, **dadurch gekennzeichnet, dass** die zwei Zwischenverkleidungsteile (30) Teile aus Spritzguss-Kunststoff sind ausgehend von der gleichen Gießform.

10. Baugruppe zum Verkleiden gemäß irgendeinem der Ansprüche 1 bis 9, **dadurch gekennzeichnet, dass** das Strukturbauteil (2) einen Körper einer Mittelkonsole des Automobil-Fahrzeugs bildet und ein Ablagevolumen definert.

## Claims

1. A trim assembly (1) of a portion of the passenger compartment of a motor vehicle, said assembly comprising:
- a structural part (2), intended to be attached to the passenger compartment of the motor vehicle,
- a first trim part (14) attached on a first portion (6) of the structural part (2), said trim part (14) comprising an aspect face extending between a first edge (16) and a second edge (18),
- a second trim part (20) attached on a second portion (10) of the structural part (2) said trim part (20) comprising an aspect face (22) extending between a first edge (24) and a second edge (26),
- at least one intermediate trim part (30) attached on the structural part (2) and extending between the first and second trim parts (14, 20), the intermediate trim part (30) comprising an aspect face extending between a first edge (32) and a second edge (34), the first edge (32) of the aspect face of the intermediate trim part (30) being positioned so as to bear against the first edge (16) of the aspect face of the first trim part (14) and the second edge (34) of the aspect face of the intermediate trim part (30) being positioned facing the first edge (24) of the aspect face (22) of the second trim part (20),
**characterized in that** the second trim part (20) is moveably mounted on the second portion (10) of the structural part (2) and **in that** the intermediate trim part (30) comprises a member capable of displacing the second trim part (20) so as to have the first edge (24) of the aspect face (22) of the second trim part (20) bear against the second edge (34) of the aspect face of the intermediate trim part (30).

2. The trim assembly according to claim 1, **characterized in that** the second trim part (20) is mounted so as to be translationally moveable relatively to the second portion (10) of the structural part (2), along a direction for bringing the first edge (24) of the aspect face (22) of the second trim part (20) closer to the second edge (34) of the aspect face (22) of the intermediate trim part (30).

3. The trim assembly according to claim 1 or 2, **characterized in that** the member is a guiding pin (38) received in a lumen (42) of the second trim part (20), the insertion of the guiding pin (38) into said lumen (42) causing displacement of the second trim part (20) on the second portion (10) of the structural part (2) so as to have the first edge (24) of the aspect face (22) of said second trim part (20) bear against the second edge (34) of the aspect face of the intermediate trim part (30).

4. The trim assembly according to claim 3, **characterized in that** the lumen (42) of the second trim part (20) is positioned facing an orifice (44) of the structural part (2), the guiding pin (38) passing through the lumen (42) of the second trim part (20) and being introduced into the orifice (44) of the structural part (2), the introduction of the guiding pin (38) into said orifice (44) causing the positioning of the second trim part (20) relatively to the structural part (2) and relatively to the intermediate trim part (30).

5. The trim assembly according to claim 3 or 4, **characterized in that** the lumen (42) is formed on a structural portion (28) of the second trim part (20), adjacent to the aspect face (22), the guiding pin (38) protruding from an extreme portion (40) of the internal face of the intermediate trim part (30), opposite to the aspect face of said intermediate trim part (30), said extreme portion (40) covering the structural portion (28) of the second trim part (20).

6. The trim assembly according to claims 2 and 3, **characterized in that** the intermediate trim part (30) comprises an upstream guiding pin (38) and a downstream guiding pin (38), the second trim part (20) comprising an upstream lumen (42) and a downstream lumen (42), the insertion of the upstream guiding pin (38) into the upstream lumen (42) causing the positioning of the second trim part (20) along the direction for coming closer and the insertion of the downstream guiding pin (38) into the downstream lumen (42) causing the positioning of the second trim part (20) along the direction for coming closer and along a direction of elevation of the structural part (2).

7. The trim assembly according to any of claims 2 to 6, **characterized in that** the second trim part (20) comprises at least one centering pin (46) protruding from the second trim part (20) along the direction for coming closer, the structural part (2) comprising at least one orifice (48) for receiving said centering pin (46), said centering pin (46) positioning and guiding the displacement of said second trim part (20) relatively to the structural part (2) when said centering pin (46) is introduced into said receiving orifice (48).

8. The trim assembly according to any of claims 1 to 7, **characterized in that** the structural part (2) comprises two flanks (12) connected to each other through the first portion (6) and through the second portion (10), said portions (6, 10) extending on either side of said flanks (12), the trim assembly comprising two intermediate trim parts (30) extending on each flank (12) of the structural part (2) between the first and second trim parts (14, 20), respectively.

9. The trim assembly according to claim 8, **characterized in that** both intermediate trim parts (30) are parts in injected plastic material stemming from a same mold.

10. The trim assembly according to any of claims 1 to 9, **characterized in that** the structural part (2) forms the body of a central console of a motor vehicle and defines a storage space (4).
